# EUROPÄISCHE PATENTSCHRIFT

(11) **EP 3 472 459 B1**
(45) Veröffentlichungstag und Bekanntmachung des Hinweises auf die Patenterteilung: **17.06.2020**
(21) Anmeldenummer: 17710866.9
(22) Anmeldetag: 14.03.2017
(51) Int. Cl.: F03D 17/00

(54) **VERFAHREN ZUR ÜBERWACHUNG EINER ROTORBLATTVERSTELLUNG**
METHOD FOR MONITORING A ROTOR BLADE ADJUSTMENT
PROCÉDÉ DE SURVEILLANCE D'UN RÉGLAGE DE PALES DE ROTOR

(30) Priorität: 16.06.2016 DE 102016210755
(43) Veröffentlichungstag der Anmeldung: 24.04.2019
(73) Patentinhaber: ContiTech Antriebssysteme GmbH, 30165 Hannover (DE)
(72) Erfinder: FISS, Tim, 30519 Hannover (DE); KUCHARCZYK, Andre, 29499 Gülden (DE); MARWEDE, Rolf, 30559 Hannover (DE)
(74) Vertreter: Kilsch, Armin Ralph
(86) Internationale Anmeldenummer: PCT/EP2017/055891
(87) Internationale Veröffentlichungsnummer: WO 2017/215797

(56) Entgegenhaltungen:
- DE-A1-102008 013 926
- DE-A1-102013 206 878

## Beschreibung

Die Erfindung betrifft ein Verfahren zur Überwachung einer Rotorblattverstellung an einer Windkraftanlage, bei der die Verstellung eines drehbar gelagerten Rotorblattes durch einen Zahnriementrieb erfolgt, bei dem ein mit Festigkeitsträger-Corden versehener Zahnriemen mindestens in eine mit einem Antriebsmotor verbundene und mit einer komplementären Verzahnung versehene Antriebsscheibe teilweise umlaufend eingreift und am Fuß des Rotorblattes mit letzterem zur Übertragung des zur Verstellung erforderlichen Drehmomentes form- und/oder reibschlüssig verbunden ist. Ebenfalls betrifft die Erfindung einer Einrichtung, die in besonderer Weise zur Durchführung des Verfahrens geeignet ist.

Die Erzeugung von elektrischer Energie durch Windkraftanlagen ist dann besonders effektiv, wenn die Windkraftanlage bzw. der Generator im Bereich ihrer Nennleistung arbeiten kann. Bei unterschiedlichen Windgeschwindigkeiten ist dies dann effizient und materialschonend für die gesamte Anlage, wenn die Drehzahl des Rotors trotz schwankender Windstärken annähernd konstant gehalten wird. Die exakte Leistungsregelung ist daher für den gleichmäßigen Lauf des Generators besonders wichtig. Eine Regelung der Leistungsaufnahme geschieht heute in aller Regel durch Verdrehen der Rotorblätter. Die Rotorblätter werden durch einen Blattverstellantrieb, die so genannte Rotorblattverstellung, in unterschiedliche Positionen in Relation zur Anströmung durch den Wind gebracht.

Bei schwachem Wind werden die Rotorblätter etwa so eingestellt, dass das Rotorblattprofil mit einem großen Anstellwinkel, d.h. mit nahezu voller Breite gegen die Strömung steht. Bei auffrischendem Wind wird dann der Anstellwinkel zunehmend reduziert, bis bei Sturm die Blätter parallel zur Windströmung gerichtet werden und der Rotor im Extremfall stoppt und sich nicht mehr dreht. Die Rotorblattverstellung ist daher eines der wichtigsten Regelsysteme einer modernen Windenergieanlage. Die Regelung der Verstellung wird auch als "Pitch-Regelung" bezeichnet. Für den Verstellmechanismus als solchen existieren unterschiedliche elektrische und hydraulische Systeme, nämlich elektromechanische Verstelleinrichtungen mit Zahnradantrieben/Getrieben, hydraulische Verstelleinrichtungen mit Zylinder, oft für jedes einzelne Rotorblatt, ebenso wie die bei der hier vorliegenden Erfindung betroffene Verstelleinrichtung der Rotorblätter über einen Zahnriementrieb.

Abhängig von den einzelnen Systemen ist eine Blattverstellung um bis zu 180 Grad um die senkrecht zur Drehachse gelegene Rotorlängsachse möglich.

Dabei erfordern die heute noch dominierenden Stirnradlösungen einen relativ hohen Wartungsaufwand, da u.a. der Schmierfilm erhalten werden muss, d.h. dass in regelmäßigen Abständen nachgefettet werden muss.

Diesen Nachteil vermeidet eine Verstelleinrichtung der Rotorblätter über einen Zahnriementrieb. Bei einer solchen Verstelleinrichtung läuft ein Zahnriemen kämmend über eine mit einem Antriebsmotor verbundenen, in der Regel auf der Motorwelle angebrachten Antriebsscheibe und weiter über einen am Fuße des Rotorblattes angebrachten Zahnkranz. Durch die über den Zahnriemen am Zahnkranzumfang angreifende Radialkraft kann dann das Rotorblatt stufenlos in beliebiger Weise verdreht werden. Eine solche Einrichtung offenbart die DE 10 2013 206 878 A1.

Bei allen Rotorblattverstellungen entstehen jedoch Nachteile dadurch, dass Wartungsarbeiten extrem aufwendig sind, da jeweils ein Monteur die Windkraftanlage besteigen und diese Arbeiten in großer Höhe vornehmen muss. Zudem führt die Wartung zu einer unerwünschten Unterbrechung des Betriebs. Da der Zustand des Verstellmechanismus als solcher unbekannt ist, wird darüber hinaus oft auf Verdacht in regelmäßigen Abständen gewartet und nicht abhängig vom tatsächlichen Zustand der Rotorblattverstellung.

Bei einer Rotorblattverstellung durch einen Zahnriementrieb ist so z. B. der Verschleiß des Riemens unbekannt und muss durch eine regelmäßige Kontrolle durch einen Monteur begutachtet werden. Die Vorhersage eines erforderlichen Wechsels eines Zahnriemens ist nur sehr bedingt möglich, da unterschiedliche Lastkollektive durch Wind auch einen unterschiedlichen Verschleiß erzeugen. Nach Sonderereignissen wie Sturmböen ist oft auch eine zeitnahe Überprüfung auf Schäden gar nicht möglich. Zudem ist der Fachmonteur für Windkraftanlagen in der Regel kein Experte für Zahnriemen.

Im Rahmen der Anlagensteuerung und-Überwachung sind mittlerweile Ferndiagnose-Systeme im Einsatz, bei denen die Windkraftanlagen sind an ein Ferndiagnosenetz angeschlossen, das alle Werte und Betriebszustände und eventuelle Störungen an eine Zentrale übermittelt. Diese koordiniert dann alle Wartungsarbeiten. Dabei erfolgt eine Überwachung vieler mechanischer und elektrischer/elektronischer Komponenten einer Windkraftanlage, um Veränderungen zu erkennen und Schadensereignissen durch rechtzeitige Maßnahmen vorbeugen zu können. Nachteiligerweise gehört eine Überwachung des Zustands von Rotorblattverstellungen, insbesondere Rotorblattverstellungen mit Zahnriementrieben, bisher nicht dazu.

Für die Erfindung bestand also die Aufgabe, ein Verfahren und eine Einrichtung zur Überwachung von Zahnriementrieben zur Rotorblattverstellung an Windkraftanlagen bereitzustellen, die im Rahmen einer Ferndiagnose mit in die Überwachung der Windkraftanlage eingebunden werden können.

Gelöst wird diese Aufgabe durch die Merkmale des Hauptanspruchs. Weitere vorteilhafte Ausbildungen sind in den Unteransprüchen offenbart. Ebenfalls offenbart ist eine Einrichtung, die in besonderer Weise zur Durchführung des erfindungsgemäßen Verfahrens geeignet ist.

Bei dem erfindungsgemäßen Verfahren werden durch Sensoren oder Prüfungseinrichtungen und/oder Video- oder Aufzeichnungseinrichtungen ermittelte bzw. erfasste Daten, insbesondere Messdaten, die den Betriebszustand oder physikalisch-geometrischen Zustand des die Rotorblätter verstellenden Zahnriemens innerhalb der Rotorblattverstellung repräsentieren, mittels einer Funkübertragungseinrichtung in eine von der Windkraftanlage entfernte Überwachungszentrale gemeldet und dort ausgewertet.

Solche Messdaten, die den Betriebszustand oder physikalisch-geometrischen Zustand des die Rotorblätter verstellenden Zahnriemens innerhalb der Rotorblattverstellung repräsentieren, erlauben die Beurteilung des Zustandes des verstellen Mechanismus, ohne dass ein Monteur die Windkraftanlage besteigen muss. Kennzeichnend für den Betriebszustand wäre zum Beispiel der Gewebezustand eines gewebebeschichteten Riemens, der durch Videoüberwachung kontrolliert werden kann. Findet man bei einer solchen Überwachung geschädigtes Gewebe, ausgerissene Fäden oder Gewebeabrisse, so ist ein Eingreifen im Sinne einer Wartung nötig. Der physikalisch-geometrische Zustand eines Zahnriemens kann ebenfalls durch eine Kamera überwacht werden, die auf bestimmte Stellen am Riemen gerichtet ist und dort z.B. Brüche oder Risse entdecken kann, die auf einer Materialermüdung schließen lassen. Die Beurteilung der Messdaten in einer von der Windkraftanlage entfernte Überwachungszentrale durch dort arbeitende Monteure oder durch Überwachungspersonal erleichtert also die Entscheidung, ob eine Wartung in den Anlagen selbst erforderlich ist oder nicht. Dadurch können Stillstandszeiten an den Anlagen und unnötige Sichtkontrollen in den Türmen bzw. Gondeln vermieden werden.

Vorteilhafterweise greift der Zahnriemen zur Verstellung der Rotorblätter dabei in einen mit einer komplementären Außenverzahnung versehenen und am Fuß des Rotorblattes angeordneten Zahnkranz teilweise umlaufend ein. Dadurch ergibt sich eine besonders sichere und spielfreie Übertragung des zur Verstellung erforderlichen Drehmoments.

Eine vorteilhafte Weiterbildung besteht darin, dass eine zum Zahnriementrieb bzw. zur Rotorblattverstellung/Stelleinrichtung gehörige Steuerungseinheit vorgesehen ist, durch welche die Erzeugung, Aufnahme und die Anforderung von Messdaten sowie die Übertragung an die Überwachungszentrale initiiert und gesteuert wird. Dadurch können programmierte Prüfungsroutinen ablaufen und regelmäßige Kontrollen periodisch durchgeführt werden.

Eine weitere vorteilhafte Ausbildung besteht darin, dass über eine Magnetprüfungseinrichtung die Festigkeitsträger-Corde auf Cord-Brüche anzeigende Magnetfeldveränderungen und/oder mit einer Kamera der Zahnfußgrund der Zähne des Zahnriemens auf Risse oder Schädigungen überprüft werden. Dies sind in jedem Falle die beiden aussagestärksten Prüfungen, mit denen Schädigungen festgestellt werden können, die unmittelbar gravierende Auswirkungen auf die verstellen haben können.

Eine weitere vorteilhafte Ausbildung besteht darin, dass ein dem Riementrieb zugeordneter Drehwinkelgeber vorgesehen ist, dessen Signale in der Steuerungseinheit zur lagerichtigen Zuordnung der Daten bzw. Messdaten verwendet werden. Insbesondere zusammen mit einer weiteren vorteilhaften Ausbildung des Verfahrens, bei dem die Steuerungseinheit auf ein Signal der Überwachungszentrale oder in periodischen Abständen den Zahnriementrieb so ansteuert, dass alle Drehpositionen des drehbar gelagerten Rotorblattes durchfahren und die zugehörigen Messdaten des die Rotorblätter verstellenden Zahnriemens im ermittelt und gespeichert werden (Messfahrt) erreicht man, dass die Steuerungseinrichtung die Foto- und Videoaufnahme und die Messungen der Sensoren bzw. Prüfungseinrichtungen derart koordiniert, dass eine klare Zuordnung der unterschiedlichen Messdaten zu einer Riemenposition möglich wird. Wenn zum Beispiel beginnende Cordbrüche in der Nähe bzw. an den gleichen Stellen zeigen, an denen Schädigungen des Zahnfußes bzw. des Gewebes auftreten, ist eine sofortige Wartung bzw. ein Austausch des Riemens geboten. Sollte sich diese Zuordnung zur Erfassung des gesamten Riemens nicht aufgrund der aktuellen Blattpositionen innerhalb eines vorgegebenen Zeitraums von selbst ergeben, so initiiert die Steuerungseinheit je nach Windsituation eine Messfahrt, bei der die Blattverstellung kontinuierlich ihren gesamten Winkelbereich und damit alle Riemenpositionen zur Überprüfung durchfährt.

Eine zur Durchführung des erfindungsgemäßen Verfahrens besonders geeignete Einrichtung ist so ausgebildet, dass in dem Zahnriementrieb der in die Antriebsscheibe und den Zahnkranz teilweise umlaufend eingreifende Zahnriemen mindestens eine als Rückenrolle ausgebildete Umlenkrolle umläuft bzw. aufweist und dass dem Zahnriementrieb folgende Einrichtungen zugeordnet sind:
- eine Einrichtung zur zerstörungsfreien Prüfung für Überwachung der im Zahnriemen befindlichen Festigkeitsträger-Corde,
- eine im Bereich der Anlage des Zahnriemens an die Rückenrolle auf dessen Profilseite ausgerichtete Kamera mit entsprechenden Beleuchtungseinrichtungen,
- eine Steuerungseinheit zur Verarbeitung der Signale der Einrichtung zur zerstörungsfreien Prüfung (Prüfungssignale) und der Kamerasignale,
- eine mit der Steuerungseinheit kommunizierende Funkeinrichtung zur Übermittlung der Prüfungssignale und Kamerasignale an eine Empfangseinrichtung,
wobei die Empfangseinrichtung eine Rechnereinrichtung zur Speicherung der Prüfungs- und Kamerasignale sowie zu deren Weiterverarbeitung zum Zwecke der Fehlererkennung/Diagnose des Zahnriemens aufweist. So kann Diagnosedaten z.B. direkt an die Datenbank/an den Server eines Riemenherstellers übertragenen und dort durch Experten ausgewertet werden. Der Betreiber der Windkraftanlage erhält dann ein qualifiziertes Diagnoseergebnis inklusive einer Wartungsempfehlung. Die Verbindung zum Austausch bidirektionaler Daten mit dem Server ist dann entsprechend zu verschlüsseln. Damit können auch sensible Daten ausgetauscht werden, insbesondere die Kennung der Windkraftanlage, die Kennung des Propellerblattes und die Messergebnisse von zerstörungsfreien Prüfungen des Zahnriemens bzw. der Stahlcorde im Riemen sowie Video-Streamingdaten der Kameraeinheit. Die Steuerungseinheit koordiniert dann die Messdatenanforderung, die Messdatenerzeugung und deren Übertragung an den Server beim Riemenhersteller. Die Steuerungseinheit koordiniert die Foto- und Videoaufnahme und die weiteren Prüfungen derart, dass eine Zuordnung der Messdaten zur Riemenposition möglich wird

Hierbei ist es besonders vorteilhaft, dass die Kamera bzw. das Kamerasystem an der Rückenrolle auf den gegengebogenen Zahnriemen blickt. So können durch das Zurückbiegen des Zahnriemens, bei dem die Zähne gespreizt werden, Schädigungen des Zahnfussgrundes und des Gewebes besonders deutlich erkannt werden. Zusätzlich besitzt das Kamerasystem einen oder mehrere LED-Strahler, um einen gute Ausleuchtung des betrachteten Bereiches zu erzielen.

Eine weitere vorteilhafte Ausbildung der erfindungsgemäßen Einrichtung besteht in diesem Sinne darin, dass in dem Zahnriementrieb ein mit magnetisierbaren Festigkeitsträger-Corden versehener Zahnriemen vorgesehen ist und die Einrichtung zur zerstörungsfreien Prüfung als Magnetprüfungseinrichtung ausgebildet ist, vorzugsweise einer Magnetprüfungseinrichtung, bei der mit einem Permanentmagneten die Festigkeitsträger-Corde im Betrieb magnetisiert und die Ausbildung eines dadurch entstandenen Magnetfelds mit Hilfe einer Anzahl von Magnetfeldsensoren (Sensor-Array) überprüft wird. Durch magnetisierbare Stahlcorde im Riemen ist dies eine besonders sichere Methode zum Erkennen von Cordbrüchen, die sich außerdem leicht in Riementrieben von Rotorblattverstellungen integrierten lässt, da die einzelnen Bauteile relativ kleine Abmessungen aufweisen.

Eine weitere vorteilhafte Ausbildung besteht darin, dass die Einrichtung zur zerstörungsfreien Prüfung an einem freien Trum innerhalb des Zahnriementriebs angeordnet ist. Hier werden die Messergebnisse wenig von anderen Einrichtungen gestört. So ist bei der Magnetprüfung beispielsweise gesichert, dass das Magnetfeld der Festigkeitsträger-Corde nicht durch weitere metallische Umlenkrollen beeinflusst wird und zu Fehlmessungen führt.

Eine weitere vorteilhafte Ausbildung besteht darin, dass Funkeinrichtung und Empfangseinrichtung über ein Mobilfunknetz und/oder über das Internet bidirektional Daten austauschen. Hier kann auf einfache Weise die bestehende Infrastruktur zur Fernüberwachung/Ferndiagnose genutzt werden.

Anhand eines Ausführungsbeispiels soll die Erfindung näher erläutert werden. Es zeigen
- Fig. 1: prinzipiell eine Windkraftanlage mit verstellbaren Rotoren
- Fig. 2: die erfindungsgemäße Einrichtung zur Durchführung des Verfahrens zur Überwachung der Rotorblattverstellung einer Windkraftanlage als Prinzipskizze

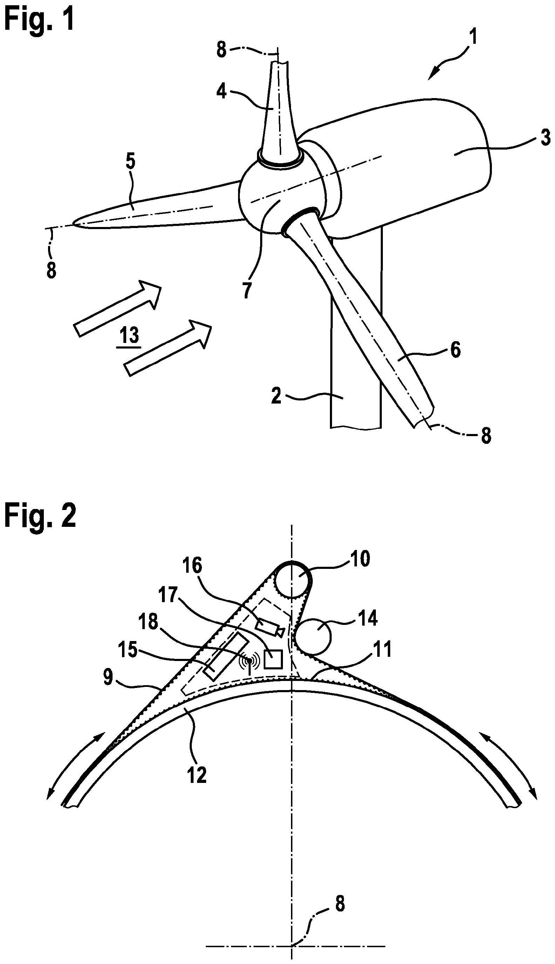

Fig. 1 zeigt prinzipiell eine Windkraftanlage 1 mit einem auf einem Turm 2 befestigten Generatorgehäuse 3. Die Windkraftanlage weist einen dreiblättrigen Rotor auf mit den Blättern 4, 5 und 6, die in der Nabe 7 gelagert und alle ihrer Anstellung zum anströmenden Wind 13 verstellbar sind, d.h. um ihre Längsachsen 8 drehbar ausgebildet und so mit einer Rotorblattverstellung ausgerüstet sind.

Fig, 2 zeigt als Prinzipskizze die Rotorblattverstellung dieser Windkraftanlage in Richtung der Blattlängsachse 8 gesehen. Die Verstellung der drehbar gelagerten Rotorblätter erfolgt durch einen Zahnriementrieb, bei dem ein mit magnetisierbaren Festigkeitsträger-Corden versehener Zahnriemen 9 einerseits in eine Antriebsscheibe 10 kämmend eingreift und andererseits in einen am Fuß des Rotorblattes angeordneten Zahnkranz 12 mit Außenverzahnung 11.

Die Antriebsscheibe 10 wird von einem hier nicht näher dargestellten Antriebsmotor angetrieben. Die Antriebsscheibe und der Zahnkranz sind mit einer zum Zahnriemen komplementären Verzahnung versehen und der Zahnriemen umschlingt Antriebsscheibe und Zahnkranz um einen Teil des jeweiligen Außenumfangs.

Der Zahnriemen 9 umläuft mit seinem Rücken auch eine als Rückenrolle ausgebildete Umlenkrolle 14, die gleichzeitig als Spannrolle dient. Somit bilden Zahnriemen 9, Antriebsscheibe 10, Umlenkrolle 14 und Zahnkranz 12 den Zahnriementrieb, mit dessen Hilfe der Zahnkranz gedreht und damit das Rotorblatt um seine Längsachse 8 gedreht/verstellt wird.

Innerhalb des für den Zahnriementrieb erforderlichen Bauraums ist eine Einrichtung zur zerstörungsfreien Prüfung angeordnet, nämlich eine Magnetprüfungseinrichtung 15, bei der mit einem Permanentmagneten die Festigkeitsträger-Corde im Betrieb magnetisiert und die Ausbildung eines dadurch entstandenen Magnetfelds mit Hilfe einer Anzahl von Magnetfeldsensoren, einen so genannten Sensor-Array, überprüft wird. Die Magnetprüfungseinrichtung 15 ist an einem freien Trum des Zahnriemens innerhalb des Zahnriementriebs angeordnet, hier im freien Trum zwischen Zahnkranz 12 und Antriebsscheibe 10.

Eine solche an sich bekannte Magnetprüfung ist in besonderer Weise geeignet zur Prüfung und Überwachung der im Zahnriemen befindlichen magnetisierbaren Festigkeitsträger-Corde, da die gesamte Magnet Prüfungseinrichtungen wenig Bauraum benötigt und überaus deutliche Signale erzeugt. Bereits bei einem Bruch einzelner Corde verformt sich nämlich das an sich um die Corde linear sich ausbildende Magnetfeld zu einer bauchigen Form um die gebrochenen Enden aus und kann so leicht diktiert werden.

In dem Bereich, in dem der Zahnriemen mit seinem Rücken an der Rückenrollen anliegt, ist eine auf dessen Profilseite gerichtete Kamera 16 mit entsprechenden Beleuchtungseinrichtungen so angeordnet, dass sie auf den gegengebogenen Zahnriemen blickt. Durch das Spreizen der Zähne des Zahnriemens in diesem Bereich werden Schädigungen des Zahnfussgrundes und des Gewebes besonders deutlich erkannt.

Ebenfalls vorgesehen sind eine Steuerungseinheit 17 zur Verarbeitung der Signale der aus der Magnetprüfungseinrichtung und der Kamerasignale, sowie eine mit der Steuerungseinheit 17 kommunizierende Funkeinrichtung 18 zur Übermittlung der Prüfungssignale und Kamerasignale an eine Empfangseinrichtung, die sich in einer von der Windkraftanlage entfernte und hier nicht näher dargestellte Überwachungszentrale befindet.

### Bezugszeichenliste

### (Teil der Beschreibung)

- 1: Windkraftanlage
- 2: Turm
- 3: Generatorgehäuse
- 4: Verstellbares Rotorblatt
- 5: Verstellbares Rotorblatt
- 6: Verstellbares Rotorblatt
- 7: Nabe
- 8: Rotorblattlängsachse
- 9: Zahnriemen
- 10: Antriebsscheibe
- 11: Außenverzahnung
- 12: Zahnkranz
- 13: Wind, Windrichtung
- 14: Rückenrolle / Umlenkrolle
- 15: Magnetprüfungseinrichtung
- 16: Kamera
- 17: Steuerungseinheit
- 18: Funkeinrichtung

## Patentansprüche

1. Verfahren zur Überwachung einer Rotorblattverstellung an einer Windkraftanlage (1), bei der die Verstellung eines drehbar gelagerten Rotorblattes (4, 5, 6) durch einen Zahnriementrieb (9, 10, 12, 14) erfolgt, bei dem ein mit Festigkeitsträger-Corden versehener Zahnriemen (9) mindestens in eine mit einem Antriebsmotor verbundene und mit einer komplementären Verzahnung versehene Antriebsscheibe (10) teilweise umlaufend eingreift und am Fuß des Rotorblattes mit letzterem zur Übertragung des zur Verstellung erforderlichen Drehmomentes form- und/oder reibschlüssig verbunden ist, **dadurch gekennzeichnet, dass** durch Sensoren oder Prüfungseinrichtungen (15) und/oder Video- oder Aufzeichnungseinrichtungen (16) ermittelte Daten, insbesondere Messdaten, die den Betriebszustand oder physikalisch-geometrischen Zustand des die Rotorblätter verstellenden Zahnriemens (9) innerhalb der Rotorblattverstellung repräsentieren, mittels einer Steuerungs- und Funkübertragungseinrichtung (17, 18) in eine von der Windkraftanlage entfernte Überwachungszentrale gemeldet und dort ausgewertet werden.

2. Verfahren nach Anspruch 1, bei dem der Zahnriemen (9) in einen mit einer komplementären Außenverzahnung versehenen und am Fuß des Rotorblattes angeordneten Zahnkranz (12) teilweise umlaufend eingreift.

3. Verfahren nach Anspruch 1 oder 2, bei dem eine zum Zahnriementrieb bzw. zur Rotorblattverstellung gehörige Steuerungseinheit (17) vorgesehen ist, durch welche die Erzeugung, Aufnahme und die Anforderung von Messdaten sowie die Übertragung an die Überwachungszentrale initiiert und gesteuert wird.

4. Verfahren nach einem der Ansprüche 1 bis 3, bei dem über eine Magnetprüfungseinrichtung (15) die Festigkeitsträger-Corde auf Cord-Brüche anzeigende Magnetfeldveränderungen und/oder mit einer Kamera (16) der Zahnfußgrund der Zähne des Zahnriemens auf Risse oder Schädigungen überprüft werden.

5. Verfahren nach einem der Ansprüche 1 bis 4, bei dem ein dem Riementrieb zugeordneter Drehwinkelgeber vorgesehen ist, dessen Signale in der Steuerungseinheit (17) zur lagerichtigen Zuordnung der Daten bzw. Messdaten verwendet werden.

6. Verfahren nach Anspruch 5, bei dem die Steuerungseinheit (17) auf ein Signal der Überwachungszentrale oder in periodischen Abständen den Zahnriementrieb so ansteuert, dass alle Drehpositionen des drehbar gelagerten Rotorblattes (4, 5, 6) durchfahren und die zugehörigen Messdaten des die Rotorblätter verstellenden Zahnriemens ermittelt und gespeichert werden (Messfahrt).

7. Einrichtung zur Durchführung des Verfahrens einem der Ansprüche 1 bis 6, bei der in dem Zahnriementrieb der in die Antriebsscheibe (10) und den Zahnkranz (12) teilweise umlaufend eingreifende Zahnriemen (9) mindestens eine als Rückenrolle (14) ausgebildete Umlenkrolle umläuft, **dadurch gekennzeichnet, dass** dem Zahnriementrieb folgende Einrichtungen zugeordnet sind:
a) eine Einrichtung zur zerstörungsfreien Prüfung (15) für Überwachung der im Zahnriemen befindlichen Festigkeitsträger-Corde,
b) eine im Bereich der Anlage des Zahnriemens (9) an die Rückenrolle auf dessen Profilseite ausgerichtete Kamera (16) mit entsprechenden Beleuchtungseinrichtungen,
c) eine Steuerungseinheit (17) zur Verarbeitung der Signale der Einrichtung zur zerstörungsfreien Prüfung (15) und der Kamerasignale,
d) eine mit der Steuerungseinheit (17) kommunizierende Funkeinrichtung (18) zur Übermittlung der Prüfungssignale und Kamerasignale an eine Empfangseinrichtung,
wobei die Empfangseinrichtung eine Rechnereinrichtung zur Speicherung der Prüfungs- und Kamerasignale sowie zu deren Weiterverarbeitung zum Zwecke der Fehlererkennung/Diagnose des Zahnriemens aufweist.

8. Einrichtung zur Überwachung nach Anspruch 7, bei der in dem Zahnriementrieb ein mit magnetisierbaren Festigkeitsträger-Corden versehener Zahnriemen (9) vorgesehen ist und die Einrichtung zur zerstörungsfreien Prüfung als Magnetprüfungseinrichtung (15) ausgebildet ist, vorzugsweise einer Magnetprüfungseinrichtung, bei der mit einem Permanentmagneten die Festigkeitsträger-Corde im Betrieb magnetisiert und die Ausbildung eines dadurch entstandenen Magnetfelds mit Hilfe einer Anzahl von Magnetfeldsensoren (Sensor-Array) überprüft wird.

9. Einrichtung zur Überwachung nach Anspruch 7 oder 8, bei der die Einrichtung zur zerstörungsfreien Prüfung an einem freien Trum innerhalb des Zahnriementriebs angeordnet ist.

10. Einrichtung zur Überwachung nach einem der Ansprüche 7 bis 9, bei der Funkeinrichtung und Empfangseinrichtung über ein Mobilfunknetz und/oder über das Internet bidirektional Daten austauschen.

## Claims

1. Method for monitoring a rotor blade adjustment mechanism on a wind turbine (1), in which a rotatably mounted rotor blade (4, 5, 6) is adjusted by way of a toothed belt drive (9, 10, 12, 14), in which a toothed belt (9) provided with reinforcing support cords engages partly circumferentially at least in a drive disc (10) connected to a drive motor and provided with a complementary tooth mechanism and is form-fittingly and/or frictionally connected at the base of the rotor blade to the latter in order to transfer the torque required for the adjustment, **characterized in that** data determined by sensors or testing devices (15) and/or video or recording devices (16), in particular measured data that represent the operating state or physical and geometrical state of the toothed belt (9) adjusting the rotor blades within the rotor blade adjustment mechanism, are reported to a monitoring centre remote from the wind turbine by way of a control and radio transmission device (17, 18) and evaluated in said monitoring centre.

2. Method according to Claim 1, in which the toothed belt (9) engages partly circumferentially in a sprocket (12) provided with a complementary outer tooth mechanism and arranged at the base of the rotor blade.

3. Method according to Claim 1 or 2, in which a control unit (17) belonging to the toothed belt drive or to the rotor blade adjustment mechanism is provided, by way of which control unit the generation, recording and requesting of measured data and the transmission to the monitoring centre is initiated and controlled.

4. Method according to one of Claims 1 to 3, in which a magnetic testing device (15) checks the reinforcing support cords for magnetic field changes that indicate cord breakages and/or the tooth bottoms of the teeth of the toothed belt are checked for cracks or damage by way of a camera (16).

5. Method according to one of Claims 1 to 4, in which a rotary encoder assigned to the belt drive and whose signals are used in the control unit (17) for the positionally correct assignment of the data or measured data is provided.

6. Method according to Claim 5, in which the control unit (17) actuates the toothed belt drive, upon a signal from the monitoring centre or at periodic intervals, such that all of the rotational positions of the rotatably mounted rotor blade (4, 5, 6) are travelled through and the associated measured data of the toothed belt adjusting the rotor blades are determined and stored (measurement run) .

7. Device for performing the method according to one of Claims 1 to 6, in which, in the toothed belt drive, the toothed belt (9) engaging partly circumferentially in the drive disc (10) and the sprocket (12) runs around at least one deflection roller in the form of a return roller (14), **characterized in that** the following devices are assigned to the toothed belt drive:
a) a non-destructive testing device (15) for monitoring the reinforcing support cords situated in the toothed belt,
b) a camera (16) oriented, in the region in which the toothed belt (9) bears on the return roller, towards the profile side thereof and having corresponding illumination devices,
c) a control unit (17) for processing the signals from the non-destructive testing device (15) and the camera signals,
d) a radio device (18), communicating with the control unit (17), for transmitting the test signals and camera signals to a reception device,
wherein the reception device has a computer device for storing the test and camera signals and for further processing them for the purpose of fault detection/diagnostics on the toothed belt.

8. Monitoring device according to Claim 7, in which a toothed belt (9) provided with magnetizable reinforcing support cords is provided in the toothed belt drive and the non-destructive testing device is designed as a magnetic testing device (15), preferably a magnetic testing device in which the reinforcing support cords are magnetized during operation by a permanent magnet and the formation of a magnetic field resulting therefrom is checked using a number of magnetic field sensors (sensor array).

9. Monitoring device according to Claim 7 or 8, in which the non-destructive testing device is arranged on a free side within the toothed belt drive.

10. Monitoring device according to one of Claims 7 to 9, in which the radio device and reception device exchange data bidirectionally over a mobile radio network and/or over the Internet.

## Revendications

1. Procédé de surveillance d'un positionnement de pale de rotor sur un aérogénérateur (1), avec lequel le positionnement d'une pale de rotor (4, 5, 6) montée rotative est effectué par un mécanisme à courroie crantée (9, 10, 12, 14), avec lequel une courroie crantée (9) pourvue de côtes de renfort de résistance vient en prise partiellement circonférentielle au moins dans une poulie d'entraînement (10) reliée à un moteur d'entraînement et pourvue d'une denture complémentaire et, au niveau du pied de la pale de rotor, est reliée avec ce dernier par complémentarité de formes et/ou par friction en vue de transmettre le couple nécessaire au positionnement, **caractérisé en ce que** des données déterminées par des capteurs ou des dispositifs de contrôle (15) et/ou des dispositifs vidéo ou d'enregistrement (16), notamment des données de mesure, qui représentent l'état opérationnel ou l'état physico-géométrique de la courroie crantée (9) qui positionne la pale de rotor au sein du positionnement de la pale de rotor, sont signalées au moyen d'un dispositif de commande et de radiotransmission (17, 18) dans une centrale de surveillance éloignée de l'aérogénérateur et y sont évaluées.

2. Procédé selon la revendication 1, avec lequel la courroie crantée (9) vient en prise partiellement circonférentielle dans une couronne dentée (12) pourvue d'une denture complémentaire disposée au pied de la pale de rotor.

3. Procédé selon la revendication 1 ou 2, avec lequel une unité de commande (17) associée au mécanisme à courroie crantée ou au positionnement de pale de rotor est présente, par laquelle sont initiés et commandés la génération, l'enregistrement et la demande de données de mesure ainsi que la transmission à la centrale de surveillance.

4. Procédé selon l'une des revendications 1 à 3, avec lequel les côtes de renfort de résistance sont contrôlées par le biais d'un dispositif de contrôle magnétique (15) en vue de déceler la présence de variations du champ magnétique indiquant des ruptures de côte et/ou le fond de pied de dent des dents de la courroie crantée est contrôlé avec une caméra (16) en vue de déceler des fissures ou des dommages.

5. Procédé selon l'une des revendications 1 à 4, avec lequel un transmetteur d'angle de rotation associé au mécanisme à courroie est présent, dont les signaux sont utilisés dans l'unité de commande (17) pour l'affectation en position correcte des données ou des données de mesure.

6. Procédé selon la revendication 5, avec lequel l'unité de commande (17) commande le mécanisme à courroie crantée sur un signal de la centrale de surveillance ou à intervalles périodiques de telle sorte que toutes les positions de rotation de la pale de rotor (4, 5, 6) montée rotative sont franchies et les données de mesure associées de la courroie crantée qui positionne les pales de rotor sont déterminées et mémorisées (course de mesure) .

7. Dispositif pour mettre en œuvre un procédé selon l'une des revendications 1 à 6, avec lequel la courroie crantée (9) qui vient en prise partiellement circonférentielle dans la poulie d'entraînement (10) et la couronne dentée (12) dans le mécanisme à courroie crantée circule autour d'au moins un galet de renvoi réalisé sous la forme d'un galet pousseur (14), **caractérisé en ce que** les dispositifs suivants sont associés au mécanisme à courroie crantée :
a) un dispositif de contrôle (15) non destructif destiné à surveiller la côte de renfort de résistance qui se trouve dans la courroie crantée,
b) une caméra (16) munie de dispositifs d'éclairage correspondants, orientée dans la zone de l'application de la courroie crantée (9) contre le galet pousseur sur son côté profilé
c) une unité de commande (17) destinée à traiter les signaux du dispositif de contrôle (15) non destructif et les signaux de caméra,
d) un dispositif radioélectrique (18) qui communique avec l'unité de commande (17) en vue de communiquer les signaux de contrôle et les signaux de caméra à un dispositif de réception
le dispositif de réception possédant un dispositif de calcul destiné à mémoriser les signaux de contrôle et de caméra ainsi qu'à les traiter à des fins de reconnaissance de défaut / de diagnostic de la courroie crantée.

8. Dispositif de surveillance selon la revendication 7, avec lequel une courroie crantée (9) pourvue de côtes de renfort de résistance magnétisables se trouve dans le mécanisme à courroie crantée et le dispositif destiné à un contrôle non destructif est réalisé sous la forme d'un dispositif de contrôle magnétique (15), de préférence un dispositif de contrôle magnétique avec lequel la côte de renfort de résistance est magnétisée pendant le fonctionnement avec un aimant permanent et la formation d'un champ magnétique ainsi produit est contrôlée à l'aide d'une pluralité de capteurs de champ magnétique (réseau de capteurs).

9. Dispositif de surveillance selon la revendication 7, avec lequel le dispositif destiné à un contrôle non destructif est disposé au niveau d'un brin libre à l'intérieur du mécanisme à courroie crantée.

10. Dispositif de surveillance selon l'une des revendications 7 à 9, avec lequel le dispositif radioélectrique et le dispositif de réception échangent des données bidirectionnelles par le biais d'un réseau de radiocommunication mobile et/ou par le biais de l'Internet.
